# EUROPEAN PATENT APPLICATION

(11) **EP 4 265 368 A1**
(43) Date of publication of application: **25.10.2023**
(21) Application number: 21925762.3
(22) Date of filing: 26.10.2021
(51) Int. Cl.: B23K 26/38, B21B 1/22, B21B 15/00

(54) **LASER CUTTING METHOD FOR STEEL STRIP, LASER CUTTING EQUIPMENT, COLD ROLLING METHOD, AND MANUFACTURING METHOD OF COLD-ROLLED STEEL STRIP**

(30) Priority: 15.02.2021 JP 2021021846
(71) Applicant: JFE Steel Corporation, Tokyo 100-0011 (JP)
(72) Inventor: FUJITA, Noriki, Tokyo 100-0011 (JP); MATSUBARA, Yukihiro, Tokyo 100-0011 (JP); FUKUNAGA, Takayuki, Tokyo 100-0011 (JP)
(74) Representative: Grünecker Patent- und Rechtsanwälte PartG mbB
(86) International application number: PCT/JP2021/039400
(87) International publication number: WO 2022/172515

(57) **Abstract**

A laser cutting method for a steel strip according to the present invention includes cutting a vicinity of a joint obtained by joining a rear end of a preceding steel strip and a front end of a following steel strip by using a pulse-type laser beam, in which output of the pulse-type laser beam is set to 0.5 kw or more per 1 ms, a processing point diameter of the pulse-type laser beam is set to 0.1 mm or more and less than 0.6 mm, and a ratio between a pulse period time and a down-time is set to 0.3 or more and less than 0.8.

## Description

### Field

The present invention relates to a laser cutting method, a laser cutting facility, and a cold rolling method for a steel strip, and a method of manufacturing a cold rolled steel strip.

### Background

In a process of cold rolling for a steel strip, for the purpose of improving productivity and a yield, usually, a rear end of a preceding material (preceding steel strip) and a front end of a following material (following steel strip) are joined, and the steel strip is continuously supplied to a cold rolling line. As a result, the steel strip can be rolled with tension being applied to the entire length. The thickness and the shape of a front end and a rear end of the steel strip can be controlled with high accuracy.

Highly alloyed cold rolled steel strips and advanced laser welding machines have gradually brought joining of the preceding material and the following material by laser welding into the mainstream instead of conventional flash butt welding and the like. Regardless of welding means such as the flash butt welding and the laser welding, however, a step is inevitably formed at an end in a width direction of a joint (welded portion) between the preceding material and the following material due to differences in width and thickness between the preceding material and the following material, misalignment, and the like. Thus, if the steel strip is rolled in this state, stress may concentrate on the stepped portion, and the steel strip may fracture at the welded portion. If the steel strip fractures at the welded portion, the cold rolling line is forced to be stopped, which remarkably reduces productivity. Furthermore, a work roll damaged by a fractured piece needs to be replaced, which increases production costs.

In particular, in recent years, there has been increasing demands for reduction in gauge and increase in strength of a cold rolled steel strip for the purpose of reduction in weight and improvement in characteristics of a member. Such a situation then increases a rolling reduction and a rolling load required for cold rolling. An increase in stress concentration at a stepped portion increases a fracture rate of a steel strip at present. Therefore, a steel strip is rolled after performing notching of forming a notch (cut portion) at an end in a width direction of a welded portion for the purpose of alleviating the stress concentration at the vicinity of the stepped portion to inhibit the fracture of the steel strip at the welded portion. Note that the end in the width direction of the steel strip tends to have a poor butt accuracy and the like, insufficient welding, and a low strength. Thus, the notching is also performed for cutting off a portion having a low strength (approximately 30 mm from end in width direction).

Examples of a common notching method include a method of forming a semicircular notch without a corner by mechanical shearing as described in Patent Literature 1. The semicircular notch, however, has a uniform curvature of an outer edge and the smallest width of a steel strip at a welded portion, which generates the maximum stress at the welded portion. Therefore, Patent Literature 2 describes a method of forming a notch by laser cutting as a method for shortening a notching time. Furthermore, Patent Literature 3 describes a laser cutting method in which a small amount of dross (melt at time of laser cutting) is generated.

### Citation List

### Patent Literature

Patent Literature 1: JP H05-76911 A
Patent Literature 2: JP S60-115387 A
Patent Literature 3: JP 6354793 B2

### Summary

### Technical Problem

In a notching method as described above, however, at present, sufficient effects cannot be exerted and fracture of a steel strip at a welded portion cannot be sufficiently inhibited particularly at the time of performing cold rolling on a brittle material and a high-alloy material such as a silicon steel sheet and a high-tensile steel sheet containing a large amount of Si and Mn.

The present invention has been made in view of the above-described problems, and an object thereof is to provide a laser cutting method and a laser cutting facility for a steel strip capable of inhibiting fracture of the steel strip at a welded portion even in a case of a brittle material and a high-alloy material. Furthermore, another object of the present invention is to provide a cold rolling method for a steel strip capable of inhibiting fracture of the steel strip at a welded portion even in a case of a brittle material and a high-alloy material and stably performing cold rolling. Moreover, another object of the present invention is to provide a method of manufacturing a cold rolled steel strip capable of inhibiting fracture of a steel strip at a welded portion even in a case of a brittle material and a high-alloy material and stably manufacturing the cold rolled steel strip.

### Solution to Problem

The inventors of the present invention have found that dross generated on a cross section of a steel strip cut by a laser beam may extend to have a sharp shape by cold rolling and serve as a point of origin of cracking from an end in a width direction of the steel strip. Therefore, the inventors considered a laser cutting condition capable of further inhibiting generation of dross. As a result, the inventors have had a finding that a dross generation length to a laser cutting length can be shortened by setting the ratio (duty factor) between a pulse period time and a pulse time to less than a certain value.

Furthermore, the inventors have found that, even if the steel strip is cut by a laser beam, if a work-hardened shear surface remains in the vicinity of a welded portion, the part serves as a point of origin of stress concentration and causes fracture of the steel strip in the vicinity of the welded portion. Specifically, a cold rolled steel strip in the vicinity of the welded portion is subject to circular hole processing to the vicinity of a central portion in the width direction by using a puncher at the time of welding. The hole processing is performed for causing a cold tandem rolling mill to track a welding point position. Since the puncher is used in punching, a puncher fracture surface is a shear surface. Therefore, when high-load cold rolling is performed, stress concentrates from the puncher fracture surface, and the steel strip fractures in the vicinity of the welded portion.

The present invention has been made based on the above-described idea, and has the following features.

To solve the problem and achieve the object, a laser cutting method for a steel strip according to the present invention includes cutting a vicinity of a joint obtained by joining a rear end of a preceding steel strip and a front end of a following steel strip by using a pulse-type laser beam, wherein output of the pulse-type laser beam is set to 0.5 kw or more per 1 ms, a processing point diameter of the pulse-type laser beam is set to 0.1 mm or more and less than 0.6 mm, and a ratio between a pulse period time and a down-time is set to 0.3 or more and less than 0.8.

Moreover, in the laser cutting method for the steel strip according to the present invention, a portion cut by the pulse-type laser beam includes both end surfaces in a width direction of the steel strip and one or more closed cross-sectional shapes.

Moreover, in the laser cutting method for the steel strip according to the present invention, compressed air of 0.5 MPa or more is used as gas used for the pulse-type laser beam.

Moreover, a laser cutting facility for a steel strip according to the present invention is the facility in which a vicinity of a joint obtained by joining a rear end of a preceding steel strip and a front end of a following steel strip is cut by using a pulse-type laser beam, wherein output of the pulse-type laser beam is set to 0.5 kw or more per 1 ms, a processing point diameter of the pulse-type laser beam is set to 0.1 mm or more and less than 0.6 mm, and a ratio between a pulse period time and a pulse time is set to 0.3 or more and less than 0.8.

Moreover, in the laser cutting facility for the steel strip according to the present invention, a portion cut by the pulse-type laser beam includes both end surfaces in a width direction of the steel strip and one or more closed cross-sectional shapes.

Moreover, in the laser cutting facility for the steel strip according to the present invention, compressed air of 0.5 MPa or more is used as gas used for the pulse-type laser beam.

Moreover, a cold rolling method for a steel strip according to the present invention includes performing cold rolling on a steel strip cut by the laser cutting method for the steel strip according to the present invention.

Moreover, a method of manufacturing a cold rolled steel strip according to the present invention includes manufacturing the cold rolled steel strip by a process including the cold rolling method for the steel strip according to the present invention.

### Advantageous Effects of Invention

According to a laser cutting method and a laser cutting facility for a steel strip of the present invention, fracture of the steel strip at a welded portion can be inhibited even in a case of a brittle material and a high-alloy material. Furthermore, according to a cold rolling method for a steel strip of the present invention, fracture of the steel strip at a welded portion can be inhibited even in a case of a brittle material and a high-alloy material, and cold rolling can be stably performed. Moreover, according to a method of manufacturing a cold rolled steel strip of the present invention, fracture of a steel strip at a welded portion can be inhibited even in a case of a brittle material and a high-alloy material, and the cold rolled steel strip can be stably manufactured.

### Brief Description of Drawings

FIG. 1 is a schematic view illustrating a laser cutting method for a steel strip according to one embodiment of the present invention.
FIG. 2 includes a cross-sectional image and a surface image of a sample material.
FIG. 3 illustrates a duty factor.

### Description of Embodiments

A laser cutting method, a laser cutting facility, a cold rolling method for a steel strip, and a method of manufacturing a cold rolled steel strip according to one embodiment of the present invention will be described below with reference to the drawings. Note that the following embodiment illustrates an apparatus and a method for embodying the technical idea of the present invention, and does not specify the materials, shapes, structures, arrangements, and the like of components to those in the following embodiment. Furthermore, the drawings are schematic. Therefore, it should be noted that the relation, the ratio, and the like between a thickness and a planar dimension are different from actual ones, and the relation and the ratio between each other in mutual drawings are different in some portions.

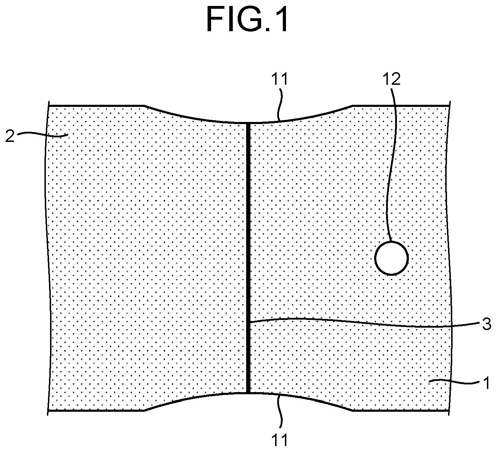

FIG. 1 is a schematic view illustrating a laser cutting method for a steel strip according to one embodiment of the present invention. As illustrated in FIG. 1, in the laser cutting method for a steel strip according to one embodiment of the present invention, cutting using a laser beam (laser cutting) is performed on a predetermined range of the steel strip including ends in a width direction of a welded portion 3 between a rear end of a preceding steel strip 1 and a front end of a following steel strip 2 to form an arc-shaped notch 11. This enables the notch 11 to be formed without causing work hardening at the end in the width direction of the welded portion 3. Furthermore, even in a case of a brittle material and a high-alloy material such as a silicon steel sheet and a high-tensile steel sheet containing a large amount of Si or Mn, the preceding steel strip 1 and the following steel strip 2 can be continuously cold-rolled without causing fracture at the welded portion 3. Note that the shape of the notch 11 and a trajectory of laser cutting (scanning trajectory of laser beam) are not limited to those in the embodiment. The notch 11 may have another shape such as a semicircular shape and a substantially isosceles trapezoidal shape. In addition, in the embodiment, punching to the vicinity of a central portion in the width direction of a steel strip, which has been conventionally performed by a puncher, is performed by laser cutting of a closed cross-sectional shape. Note that, although, in the example in FIG. 1, a hole 12 having a closed cross-sectional shape is formed in the preceding steel strip 1, the hole 12 may be formed in the following steel strip 2. Furthermore, the closed cross-sectional shape, the number of cut holes, and the cutting position coordinates are also not particularly limited. In addition, when a method of tracking a welding point is implemented by a leakage flux method and another image determination method, the hole is not required to be formed.

In the embodiment, a laboratory-scale rolling experiment to be described below was performed in order to evaluate the influence of dross remaining at the time of laser cutting on cold rolling. That is, a silicon steel sheet having a sheet thickness of 2 mm was used as a sample material. The silicon steel sheet contained 3.3 mass% of Si. Both ends in the width direction of the silicon steel sheet were cut by a laser. Then, cold rolling at a total rolling reduction of 50% was performed on the sample material by using a rolling mill having a work roll diameter of 500 mm without applying tension.

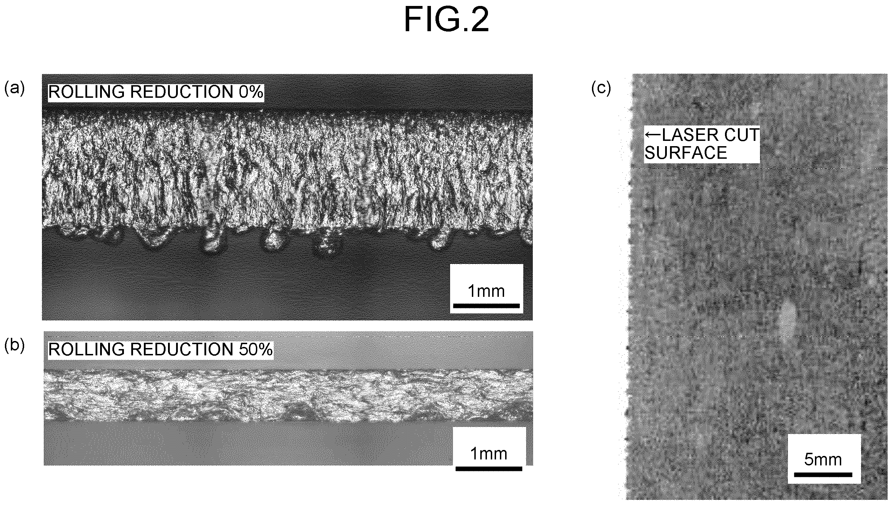

FIG. 2(a) is a cross-sectional image of the sample material having a rolling reduction of 0%. FIG. 2(b) is a cross-sectional image of the sample material having a rolling reduction of 50%. FIG. 2(c) is a surface image of the sample material having a rolling reduction of 50%. As illustrated in FIGS. 2(a) to (c), it can be seen that, when dross remains due to a defect of a laser cutting condition, the dross remains even after the cold rolling, and the dross extends to have a sharp shape. In the experiment, tension was not applied to the sample material. In actual production, however, rolling is performed while tension is applied in tandem rolling. In the tandem rolling, the dross that has extended to have a sharp shape is estimated to serve as a point of origin of stress concentration and cause fracture of a steel strip.

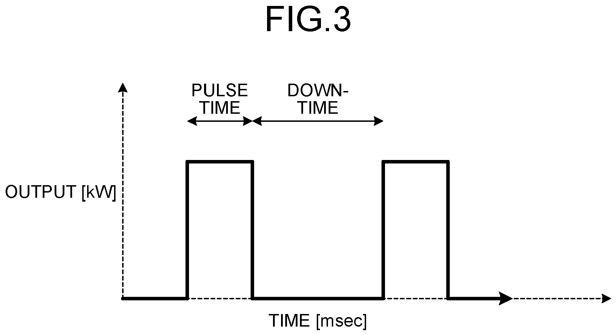

Therefore, in the embodiment, in order to minimize an area where dross as described above is attached, the laser cutting condition includes laser output of 0.5 kw or more per 1 ms, a processing point diameter of a laser of 0.1 mm or more and less than 0.6 mm, and the ratio (duty factor) between a pulse period time and a pulse time in FIG. 3 of 0.3 or more and less than 0.8. Under a laser cutting condition of a processing point diameter of a laser of 0.6 mm or more or a duty factor of more than 0.8, an amount of heat input increases, and dross is easily generated. In contrast, under a laser cutting condition of a processing point diameter of a laser of less than 0.1 mm or a duty factor of less than 0.3, the amount of heat input decreases, and a steel strip cannot be cut.

The processing point diameter of a laser is more preferably 0.2 to 0.3 mm. The duty factor is more preferably 0.5 to 0.75. Furthermore, gas used for a pulse-type laser is preferably compressed air of 0.5 MPa or more. This is because generated dross easily remains on a cut cross section without being blown off under a gas pressure of less than 0.5 MPa.

Furthermore, when oxygen is used as gas to be used at the time of laser cutting, cutting at low output can be performed by using oxidation reaction heat. Under a condition of a low scanning speed of a laser beam and a condition of high laser output, however, a self-burning phenomenon occurs. In the self-burning phenomenon, a portion to which a laser beam is not applied melts in a developing manner. A similar effect can be obtained with nitrogen. Under the condition of a low scanning speed and a condition of high output, however, nitrogen may be melted and fixed to a melted portion or dross to generate a hard nitride or a nitrided layer, which may become a point of origin of stress concentration. Compressed air is preferably used since the compressed air is inexpensive and oxidation reaction heat can be used due to oxygen appropriately contained in the compressed air.

In addition, conventional shearing does not cause cracking (edge cracking) at an end in the width direction in normal low-carbon steel. Therefore, the present invention is not necessarily required to be applied to a type of steel in which fracture hardly occurs in the vicinity of a welded portion. The present invention should be applied to a type of steel such as a brittle material and a high-alloy material in which a welded portion fractures by shearing. Note, however, that a cold tandem rolling mill may be a dedicated mill for a silicon steel sheet and a high-tensile steel sheet, or may be a dual-use mill that rolls low-carbon steel together. In that case, notching for low-carbon steel by laser cutting causes no problem. Furthermore, both a shearing machine and a laser cutting machine may be provided together and used depending on the type of steel.

### [Example]

The present invention will be described below based on an example. An experiment was performed by using a cold tandem rolling mill including a total of five rolling stands. In the experiment, a material steel sheet for an electromagnetic steel sheet was adopted as a material to be rolled. The material steel sheet had a base thickness of 2.0 mm and a sheet width of 1000 mm, and contains 2.8 to 3.3 mass% of Si. The material steel sheet was cold-rolled to have a finished thickness of 0.300 mm. In the example, laser cutting was performed based on the embodiment of the present invention. That is, in the vicinity of a welded portion between a preceding steel strip and a following steel strip, semicircular laser cutting for both end surfaces of the steel strip and circular closed cross-sectional laser cutting for a width central position of the preceding steel strip were performed. In contrast, in a comparative example, a laser cutting condition in which laser cutting satisfying the condition of the present invention is not performed was used. Rolling was performed similarly to that in the example except for that. Table 1 illustrates dross generation situations and fracture coil incidences after rolling 100 coils in the example and the comparative example in which the laser cutting as described above was performed. Note that ⊚, O, △, and × of the dross height and the dross generation length in Table 1 have a meaning as described in Table 2.

**Table 1**

| Condition | Si amount [%] | Output [kW] | Duty factor | Processing point diameter [mm] | Puncher method | Gas type | Pressure [MPa] | Scanning speed [m/min.] | Dross height | Dross generation length | Fracture incidence [%] | Note |
|---|---|---|---|---|---|---|---|---|---|---|---|---|
| 1 | 3.0 | 0.8 | 0.5 | 0.25 | Laser | Compressed air | 1.0 | 3.0 | ⊚ | ⊚ | 1.0 | Example |
| 2 | 3.0 | 0.4 | 0.5 | 0.25 | Laser | Compressed air | 1.0 | 3.0 | × | △ | 10.0 | Comparative example |
| 3 | 3.0 | 0.8 | 0.8 | 0.25 | Laser | Compressed air | 1.0 | 3.0 | × | ○ | 7.5 | Comparative example |
| 4 | 3.0 | 0.8 | 0.25 | 0.25 | Laser | Compressed air | 1.0 | 3.0 | ⊚ | × | 7.0 | Comparative example |
| 5 | 3.0 | 0.8 | 0.5 | 0.60 | Laser | Compressed air | 1.0 | 3.0 | × | ○ | 6.0 | Comparative example |
| 6 | 3.0 | 0.8 | 0.5 | 0.05 | Laser | Compressed air | 1.0 | 3.0 | △ | × | 8.0 | Comparative example |
| 7 | 3.3 | 0.8 | 0.5 | 0.25 | Laser | Compressed air | 1.0 | 3.0 | ⊚ | ⊚ | 1.0 | Example |
| 8 | 2.8 | 0.8 | 0.5 | 0.25 | Laser | Compressed air | 1.0 | 3.0 | ⊚ | ⊚ | 0.5 | Example |
| 9 | 3.0 | 0.8 | 0.5 | 0.25 | Shearing | Compressed air | 1.0 | 3.0 | ⊚ | ⊚ | 2.0 | Example |
| 10 | 3.0 | 0.8 | 0.5 | 0.25 | Laser | Oxygen | 1.0 | 3.0 | ○ | ○ | 2.0 | Example |
| 11 | 3.0 | 1.0 | 0.5 | 0.25 | Laser | Nitrogen | 1.0 | 3.0 | ○ | ○ | 1.5 | Example |
| 12 | 3.0 | 0.8 | 0.5 | 0.15 | Laser | Compressed air | 1.0 | 3.0 | ⊚ | ○ | 2.0 | Example |
| 13 | 3.0 | 0.8 | 0.5 | 0.35 | Laser | Compressed air | 1.0 | 3.0 | ⊚ | ○ | 1.5 | Example |
| 14 | 3.0 | 0.8 | 0.4 | 0.25 | Laser | Compressed air | 1.0 | 3.0 | ○ | ○ | 2.0 | Example |
| 15 | 3.0 | 0.8 | 0.78 | 0.25 | Laser | Compressed air | 1.0 | 3.0 | ○ | ⊚ | 2.0 | Example |

**Table 2**

| | Dross height | Dross generation length |
|---|---|---|
| × | Cutting impossible | 80% or more of laser cutting length |
| △ | Dross of 0.2mm or more | 40 to 70% or more of laser cutting length |
| ○ | Dross of less than 0.2mm | 20 to 30% or more of laser cutting length |
| ⊚ | No dross | 10% or more of laser cutting length |

As illustrated in Table 1, the incidence of the fracture of a welded portion was 6.0 to 10.0% in the comparative example while the incidence of the fracture of the welded portion was 2% or less in the example. The above confirmed the effectiveness of the present invention. That is, an amount of generated dross can be reduced and a work hardening in the vicinity of a welded portion can be eliminated by applying the present invention and performing laser cutting on the vicinity of the welded portion between a preceding steel strip and a following steel strip. Then, this can inhibit the occurrence of the fracture of the welded portion and improve productivity and a yield.

Although the embodiment to which the invention made by the present inventors is applied has been described above, the present invention is not limited by the description and the drawings constituting a part of the disclosure of the present invention according to the embodiment. That is, other embodiments, examples, operation techniques, and the like made by those skilled in the art based on the embodiment are all included in the scope of the present invention.

### Industrial Applicability

According to the present invention, a laser cutting method and a laser cutting facility for a steel strip capable of inhibiting fracture of the steel strip at a welded portion even in a case of a brittle material and a high-alloy material can be provided. Furthermore, according to the present invention, a cold rolling method for a steel strip capable of inhibiting fracture of the steel strip at a welded portion even in a case of a brittle material and a high-alloy material and stably performing cold rolling can be provided. Moreover, according to the present invention, a method of manufacturing a cold rolled steel strip capable of inhibiting fracture of a steel strip at a welded portion even in a case of a brittle material and a high-alloy material and stably manufacturing the cold rolled steel strip can be provided.

### Reference Signs List

1 PRECEDING STEEL STRIP
2 FOLLOWING STEEL STRIP
11 NOTCH
12 HOLE

## Claims

1. A laser cutting method for a steel strip, comprising cutting a vicinity of a joint obtained by joining a rear end of a preceding steel strip and a front end of a following steel strip by using a pulse-type laser beam,
wherein output of the pulse-type laser beam is set to 0.5 kw or more per 1 ms, a processing point diameter of the pulse-type laser beam is set to 0.1 mm or more and less than 0.6 mm, and a ratio between a pulse period time and a down-time is set to 0.3 or more and less than 0.8.

2. The laser cutting method for the steel strip according to claim 1, wherein a portion cut by the pulse-type laser beam includes both end surfaces in a width direction of the steel strip and one or more closed cross-sectional shapes.

3. The laser cutting method for the steel strip according to claim 1 or 2, wherein compressed air of 0.5 MPa or more is used as gas used for the pulse-type laser beam.

4. A laser cutting facility for a steel strip, in which a vicinity of a joint obtained by joining a rear end of a preceding steel strip and a front end of a following steel strip is cut by using a pulse-type laser beam,
wherein output of the pulse-type laser beam is set to 0.5 kw or more per 1 ms, a processing point diameter of the pulse-type laser beam is set to 0.1 mm or more and less than 0.6 mm, and a ratio between a pulse period time and a pulse time is set to 0.3 or more and less than 0.8.

5. The laser cutting facility for the steel strip according to claim 4, wherein a portion cut by the pulse-type laser beam includes both end surfaces in a width direction of the steel strip and one or more closed cross-sectional shapes.

6. The laser cutting facility for the steel strip according to claim 4 or 5, wherein compressed air of 0.5 MPa or more is used as gas used for the pulse-type laser beam.

7. A cold rolling method for a steel strip, comprising performing cold rolling on a steel strip cut by the laser cutting method for the steel strip according to any one of claims 1 to 3.

8. A method of manufacturing a cold rolled steel strip, comprising manufacturing the cold rolled steel strip by a process including the cold rolling method for the steel strip according to claim 7.
